# FASCICULE DE BREVET EUROPEEN

(11) **EP 2 155 443 B1**
(45) Date de publication et mention de la délivrance du brevet: **14.09.2011**
(21) Numéro de dépôt: 08805781.5
(22) Date de dépôt: 14.05.2008
(51) Int. Cl.: B25J 5/00

(54) **ROBOT A CHASSIS ROULANT POUR L'ASSISTANCE D'UNE PERSONNE A DOMICILE**
HAUSHALTSHILFSROBOTER MIT EINEM ROLLENDEN FAHRWERK
DOMESTIC ROBOT ASSISTANT HAVING A ROLLING CHASSIS

(30) Priorité: 14.05.2007 FR 0755059
(43) Date de publication de la demande: 24.02.2010
(73) Titulaire: Robosoft, 64210 Bidart (FR)
(72) Inventeur: DUPOURQUE, Vincent, F-64600 Anglet (FR)
(74) Mandataire: Cenatiempo, Julie Adeline Anne
(86) Numéro de dépôt international: PCT/FR2008/050833
(87) Numéro de publication internationale: WO 2008/149018

(56) Documents cités:
- EP-A2- 0 304 942
- DE-A1- 4 445 554
- JP-A- 10 007 043
- JP-A- 2006 151 060
- JP-A- 2006 209 644

## Description

La présente, invention se rapporte à robot susceptible d'être utilisé pour l'assistance d'une personne à domicile, tel que defini dans le préambule de la revendication 1.

Un tel robot est connu du document JP-A-10 007 043.

Dans le monde de la robotique, de nombreux robots mobiles ont été développés dans les domaines du nettoyage, de la surveillance, du divertissement,.... Cependant, les robots existants ont tous été développés afin de répondre aux contraintes de leurs applications si bien que les robots d'un domaine considéré, par exemple les robots de nettoyage, sont conçus pour leur domaine et peuvent difficilement s'adapter à d'autres domaines. Par ailleurs, même si un robot d'un domaine considéré était modifié pour le rendre compatible avec un autre domaine, sa structure ne serait pas adaptée pour ce domaine rendant le robot moins performant.

Le développement des robots domaine par domaine conduit à les produire à l'unité ou en très petites séries ce qui se traduit par des coûts de fabrication relativement élevés. Ce point constitue un frein au développement des robots et restreint fortement leur démocratisation.

En terme de conception, les robots actuels sont développés autour de leur fonction principale. Ainsi, dans le cas par exemple du nettoyage, le robot comprend une structure roulante intégrant le ou les outils pour le nettoyage. Afin de le rendre autonome, le robot intègre une commande susceptible de contrôler le déplacement de la structure et le fonctionnement du ou des outils.

Cette commande comprend une programmation permettant de rendre le robot plus ou moins autonome, ce dernier étant susceptible de réagir seul à son environnement, notamment à des événements prévisibles. L'autonomie suppose que la programmation prévoit la survenue de certains évènements, puis la ou les réactions appropriées à ceux-ci.

Comme pour la structure, même s'il existe un tronc commun à savoir un système d'exploitation similaire à celui d'un ordinateur, assurant le fonctionnement des mémoires et des microprocesseurs, chaque concepteur de robot développe un langage qui lui est propre pour programmer les différentes tâches ou applications du robot, notamment les applications relatives au déplacement. D'autre part, la diversité des types de langages de programmation découle également des constituants utilisés tels que les capteurs, moteurs ou autres qui ont des entrées et des sorties spécifiques et non homogènes d'un constituant à l'autre. Ces coûts de développement de programmation spécifiques à chaque application conduisent là encore à augmenter les coûts des robots. Par ailleurs, ces langages de programmation sont si spécifiques qu'ils ne laissent aucune autonomie à l'utilisateur du robot qui ne peut le programmer pour éventuellement adjoindre une nouvelle fonctionnalité.

Aussi, la présente invention vise à pallier les inconvénients de l'art antérieur en proposant une structure d'un robot mobile de conception simple et polyvalente, conférant au robot une gronde maniabilité, et en proposant des moyens permettent une bonne orientation du robot. A cet effet, l'invention a pour objet un Robot selon le revendication 1.

La forme de la fente horizontale ménagée dans le capotage du robot permet d'optimiser le champ de vision du laser ou radar disposé dans celle-ci. Cette disposition permet notamment au robot de franchir des portes et permet de l'équiper de différents accessoires sans que cela ne nuise à son orientation. D'autres caractéristiques et avantages ressortiront de la description qui va suivre de l'invention, description donnée à titre d'exemple uniquement, en regard des dessins annexés sur lesquels :
- la figure 1 est une vue en perspective illustrant la partie avant du robot selon l'invention,
- la figure 2 est une vue en perspective illustrant la partie arrière du robot selon l'invention,
- la figure 3 est une vue latérale du robot,
- la figure 4 est une vue en perspective illustrant le châssis roulant,
- la figure 5 est une vue en perspective illustrant l'intérieur du robot, le capotage supérieur étant soulevé,
- la figure 6 est une vue de dessus montrant l'angle du dégagement prévu pour le laser,
- la figure 7 est une vue en perspective illustrant des accessoires du robot, notamment une station d'accueil pour recharger automatiquement les moyens d'accumulation d'énergie, des rehausses, un bras manipulateur et un mât susceptible de porter une caméra, et
- la figure 8 est une vue en perspective d'un robot selon l'invention plus particulièrement adapté pour l'assistance d'une personne à domicile.

Sur les différentes figures, on a représenté en 10 un robot selon l'invention, ce dernier étant plus particulièrement adapté pour déambuler dans un environnement domestique ou industriel.

Selon l'invention, le robot forme une plate-forme mobile sur laquelle peuvent être rapportés différents éléments af in de configurer le robot selon la ou les tâches qui lui sont affectées.

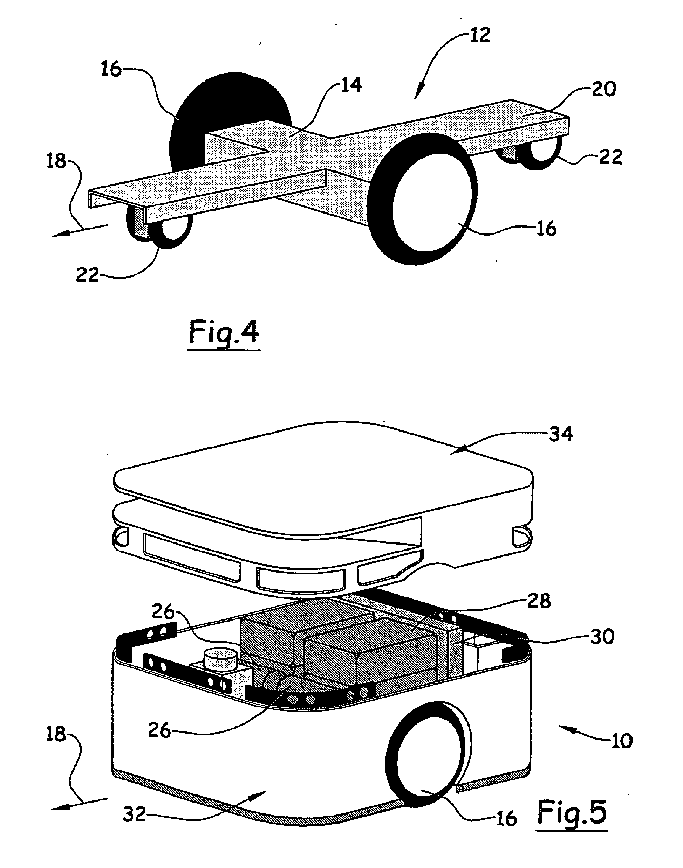

Ce robot comprend en partie inférieure un châssis roulant 12 illustré en détails sur la figure 4.

Ce châssis 12 comprend une première poutre 14 disposée dans un plan transversal supportant à chacune de ses extrémités une roue motrice 16 dont l'axe de rotation est sensiblement horizontal et disposé dans un plan transversal. A titre indicatif, l'empattement du robot est de l'ordre de 350 à 400 mm.

Pour la suite de la description, on entend par direction transversale, la direction perpendiculaire à la direction longitudinale (matérialisée par la flèche 18 sur les figures) qui correspond au mouvement avant/arrière du robot.

En complément, le châssis 12 comprend une seconde poutre 20, perpendiculaire à la première et formant avec cette dernière une croix, à laquelle sont reliées de part et d'autre de la première poutre 14 des roues folles 22.

Chaque roue folle comprend un premier axe de rotation horizontal relié à une chape elle-même montée en rotation autour d'un axe de pivotement 24 sensiblement vertical relié à la seconde poutre 20. Avantageusement, la chape d'au moins une des roues folles 22 peut se translater verticalement le long de l'axe de pivotement de l'ordre d'une dizaine de millimètre pour permettre au robot d'accéder à des rampes de l'ordre de 6°.

Pour chaque roue folle, des moyens de rappels, un ressort par exemple, tendent à contraindre la roue folle et plus particulièrement la chape en contact avec le sol et à garantir la stabilité horizontale du robot. La force de rappel du ressort est adaptée en fonction de la masse du robot pour obtenir une certaine force d'adhérence au niveau des roues motrices. Ainsi la force d'adhérence au niveau des roues motrices ne doit pas descendre au-dessous d'un seuil prédéterminé de l'ordre de 100N.

A titre indicatif, la distance entre les axes de pivotement 24 est de l'ordre de 430 mm.

En variante, une roue folle peut être remplacée par un élément roulant selon au moins deux axes de rotation et/ou de pivotement.

Cette configuration disposant les roues en losange permet d'obtenir une stabilité accrue, par rapport à une configuration à trois roues et une grande maniabilité le robot pouvant tourner sur lui-même, autour d'un axe vertical passant par son centre.

Selon les variantes, les poutres, notamment la seconde poutre, peuvent être réalisées en plusieurs parties.

Dans tous les cas, les roues motrices 16 ont des axes de rotation dans un plan transversal alors que les roues folles 22 ont des axes de pivotement verticaux disposés dans le plan médian longitudinal.

Ainsi, le châssis peut être remplacé par une coque porteuse.

Comme illustré sur la figure 5, le robot comprend d'une part des actionneurs assurant le déplacement du châssis roulant notamment deux motorisations 26, chacune destinée à entrainer en rotation respectivement une roue motrice 16, des moyens 28 d'accumulation d'énergie, et d'autre part des moyens 30 de contrôle-commande assurant la gestion des différents éléments du robot. Selon un mode de réalisation, les motorisations 26 sont de type électrique et les moyens 28 d'accumulation d'énergie des batteries.

Avantageusement, les moteurs sont des moteurs sans réducteur à courant continu, la suppression du réducteur permettant un gain de place et contribuant à améliorer la fiabilité mécanique et la limitation des jeux.

Avantageusement, les moyens 28 d'accumulation sont disposés en partie centrale, les motorisations 26 et les moyens 30 de contrôle-commande répartis autour afin d'optimiser la répartition des masses et placer le centre de gravité en position centrale, le plus bas possible pour optimiser la stabilité.

L'ensemble de ces éléments est protégé par une carrosserie. Cette dernière comprend un premier capotage 32 formant une ceinture et un second capotage 34 formant couvercle. Selon les variantes, les premier et second capotages peuvent être distincts ou réalisés d'un seul tenant.

Le premier capotage 32 a une section horizontale sensiblement carrée ou rectangulaire avec des angles arrondis. Les roues 16 sont protégées par le capotage 32, seuls les flancs extérieurs étant visibles et venant affleurer avec la surface extérieure du capotage 32.

A titre indicatif, le premier capotage a une larguer de l'ordre de 400 mm, une longueur de l'ordre de 460 mm et une hauteur de l'ordre de 120 mm, et le premier capotage s'inscrit dans un diamètre de l'ordre de 550 mm. La garde au sol est de l'ordre de 80 mm.

Le second capotage 34 comprend une plaque supérieure 36 dont le périmètre est sensiblement identique à la section du premier capotage 32, ladite plaque étant décalée vers le haut par rapport au premier capotage 32 d'une distance de l'ordre de 40 mm pour former une fente horizontale 38 dont la fonction sera détaillée par la suite. Une paroi latérale 40 permet de fermer la carrosserie entre le premier capotage et le second capotage et de délimiter le fond de la fente 38.

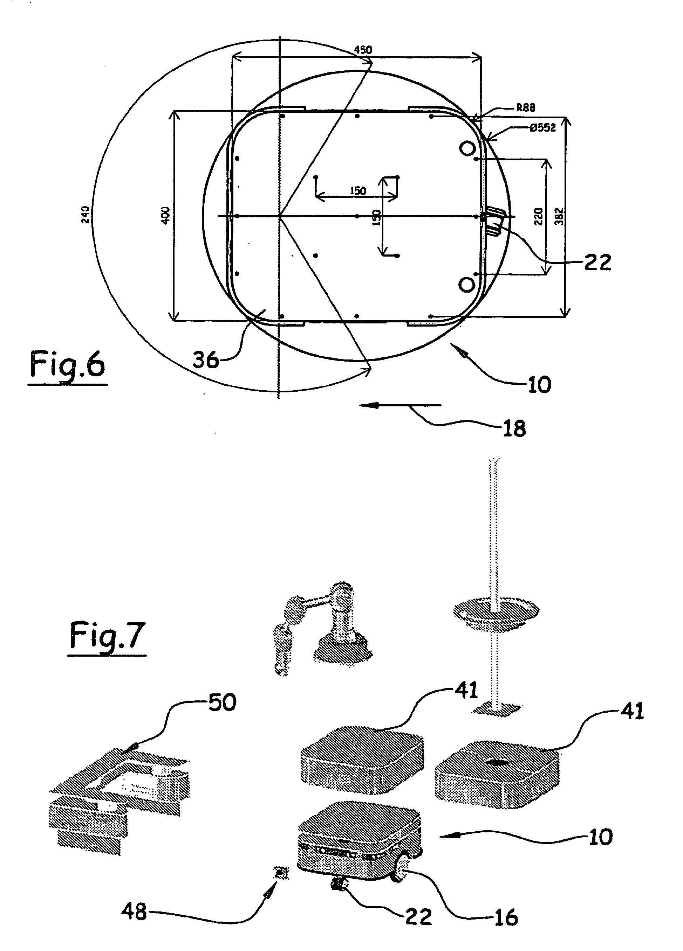

La plaque supérieure 36 comprend des moyens de fixation d'accessoires sur le robot illustrés sur la figure 7, par exemple une caméra dans le cas d'un robot utilisé pour la surveillance ou un bras manipulateur. En variante, une rehausse 41 peut être solidarisée sur la plaque supérieure 36, cette rehausse délimitant une cavité dans laquelle peuvent être disposés différents accessoires, ladite rehausse comprenant en partie supérieure une plaque sensiblement horizontale comprenant des moyens de liaison analogues à ceux de la plaque supérieure 36 de manière à fixer des accessoires ou une autre rehausse.

Pour renseigner les moyens 30 de contrôle-commande, le robot comprend des capteurs. Selon l'invention, il comprend au moins deux familles de capteurs, une ceinture 42 de capteurs à ultrasons ainsi qu'un laser ou un radar 44.

La ceinture 42 comprend des capteurs à ultrasons prévus au niveau du bord supérieur du premier capotage 32.

On privilégie les capteurs à ultrasons pour assurer une détection précise et fiable des objets à une faible distance.

Pour assurer un repérage satisfaisant la ceinture 42 comprend des capteurs à ultrasons 42.1 au niveau des angles du premier capotage, un capteur à ultrasons 42.2 au niveau de chaque face latérale du robot, un capteur à ultrasons 42.3 sur la face arrière, et deux capteurs à ultrasons 42.4 disposés de manière symétrique sur la face avant du robot.

Avantageusement, les capteurs 42.2 sont décalés vers l'avant par rapport à l'axe de rotation des roues motrices 16. Cette configuration permet de privilégier le repérage vers l'avant du robot.

Dans tous les cas, les capteurs sont affleurants avec les éléments de carrosserie afin de ne pas perturber les ondes émises ou reçues.

Le robot comprend un laser 44 disposé au-dessus de la ceinture 42, dans la fente 38 dont le fond constitué par la paroi 40 comprend deux pans orientés vers l'arrière disposés de manière symétrique et formant un angle de l'ordre de 240°. Selon l'invention, le laser 44 est protégé par le second capotage 34. Ce laser qui peut être remplacé par un radar permet de détecter les objets à une plus grande distance, mais aussi construire des cartes de l'environnement.

Le dégagement 38 permet d'optimiser le champ de vision du laser, ce dernier étant toutefois protégé par le capotage supérieur. Cette détection d'éléments disposés vers l'arrière permet lors d'un passage de porte de toujours visualiser le cadre de la porte et de continuer à renseigner les services gérant les déplacements du robot pendant un instant après le franchissement de ladite porte.

De plus, cette agencement présentant un radar dans une fente permet de rapprocher le radar de l'intersection des diagonales du losange formé par les roues afin d'optimiser le passage d'une porte et de rapporter sur le robot différents accessoires sans que cela ne nuise à l'orientation dudit robot.

En complément de la ceinture 42 de capteurs à ultrasons et du laser 44, le robot comprend un système odométrique permettant de mesurer les déplacements du robot.

En complément, le robot peut comprendre en partie inférieure du premier capotage 32 des capteurs de choc, par exemple des pare-chocs sensibles 46, et/ou au moins un capteur vidéo 48 ou une caméra (visible sur la figure 7). Le capteur 48 complète avantageusement l'odométrie, les capteurs ultrasons et le laser ou le radar, dans les fonctions de détection d'obstacle, de localisation du robot dans son environnement, ou de reconstruction 2D et 3D de son environnement.

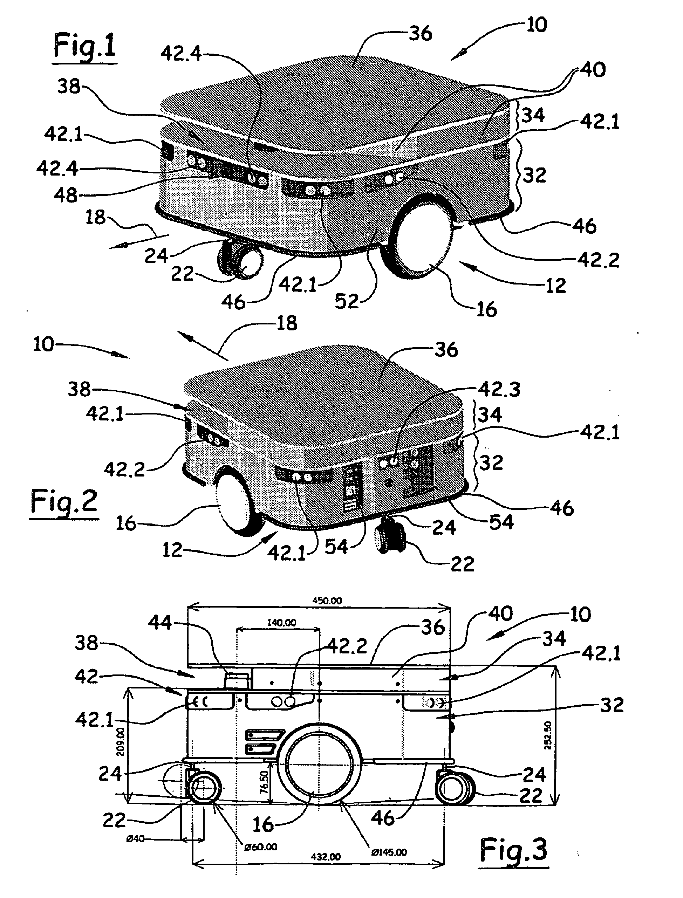

Sur la figure 7, on a représenté une station d'accueil 50 utilisée notamment pour recharger les batteries 28. A cet effet, au moins une des faces latérales du robot comprend des moyens de connexion 52 pour assurer le transfert d'énergie. Comme illustré en figure 2, la face arrière comprend au moins un logement 54, de préférence deux dans lesquels sont placés des prises, des voyants et/ou des moyens de contrôle ou de réglage.

Avantageusement, les moyens 30 de contrôle-commande comprennent des moyens pour communiquer avec d'autres robots, des ordinateurs ou des terminaux tels qu'un téléphone mobile ou un assistant personnel par exemple, la transmission pouvant s'opérer par un raccordement de type filaire ou par ondes électromagnétiques utilisant différents protocoles de communication, voire par Internet.

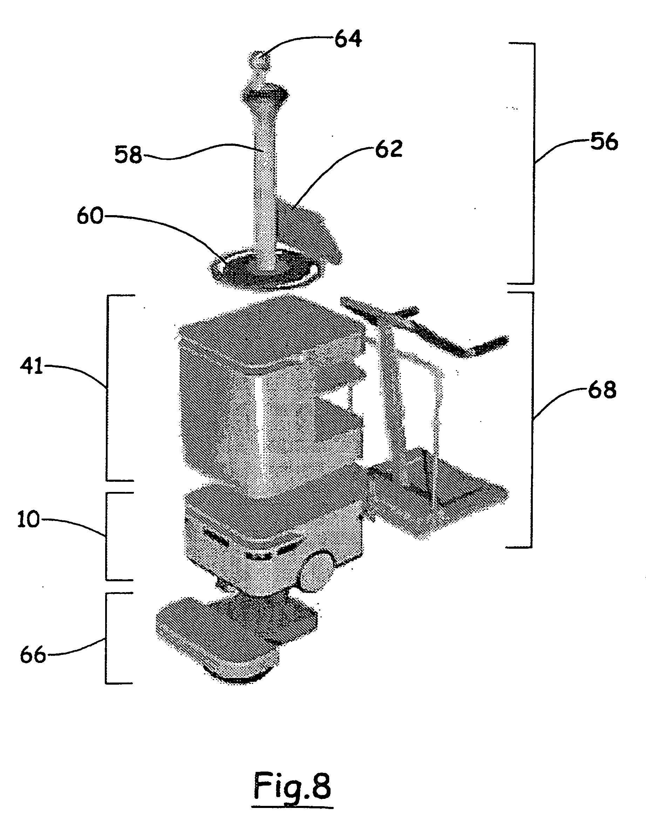

Sur la figure 8, on a représenté une variante d'un robot selon l'invention plus particulièrement adapté pour l'assistance d'une personne à domicile.

Ainsi, le robot 10 comprend une rehausse 41 utilisée notamment pour contenir des équipements ou accessoires du robot, par exemple des batteries supplémentaires) ou des effets personnels.

Le robot peut supporter également des moyens de visualisation et de communication 56 comportant un mât 58 monté pivotant par rapport à la rehausse ou au capotage du robot et supportant un plateau 60 sur lequel peut être rapporté au moins un élément tel qu'un écran 62, un ordinateur, un téléphone mobile, un PDA pour permettre notamment à une personne assise à proximité du robot de communiquer.

Au niveau de la partie supérieure du mât 58, une caméra 64 est prévue pour visualiser l'environnement du robot. Cette caméra est de préférence disposée à hauteur des yeux d'une personne. Le mât peut supporter éventuellement plusieurs caméras disposées à différentes hauteurs.

Avantageusement, le robot peut être équipé d'autres accessoires, notamment en partie inférieure d'un appareil de nettoyage 66, et/ou tracté un dispositif 68 pour faciliter la déambulation ou le changement de posture (assis/debout/assis). Enfin, des accessoires fixes pour le robot peuvent être prévus, comme par exemple une station d'accueil utilisée notamment pour recharger les batteries.

## Revendications

1. Robot susceptible d'être utilisé pour l'assistance d'une personne à domicile, comprenant un châssis roulant (12), des actionneurs (26) assurant le déplacement du châssis roulant (12), des moyens (30) de contrôle-commande renseignés par des capteurs, le châssis roulant (12) comprenant deux roues motrices (16) ayant des axes de rotation dans un plan transversal et des éléments roulants (22) selon au moins deux axes de rotation et/ou de pivotement ayant chacun un axe de pivotement vertical (24) disposé dans un plan médian longitudinal du robot, **caractérisé en ce qu'**il comprend un laser ou radar (44) disposé dans une fente (38) horizontale ménagée dans le capotage du robot, le fond de ladite fente comprenant deux pans disposés de manière symétrique par rapport au plan médian longitudinal et formant un angle de l'ordre de 240°.

2. Robot selon la revendication 1, **caractérisé en ce qu'**il comprend une barrière (42) de capteurs à ultrasons.

3. Robot selon la revendication 2, **caractérisé en ce qu'**il comprend un capotage ayant une section horizontale sensiblement carrée ou rectangulaire avec des angles arrondis et **en ce que** la ceinture de capteurs à ultrasons comprend des capteurs à ultrasons (42.1) au niveau des angles du capotage, un capteur à ultrasons (42.2) au niveau de chaque face latérale du robot, un capteur à ultrasons (42.3) sur la face arrière, et deux capteurs à ultrasons (42.4) disposés de manière symétrique sur la face avant du robot.

4. Robot selon l'une quelconque des revendications précédentes, **caractérisé en ce qu'**au moins un des éléments roulants (22) selon au moins deux axes de notation et/ou de pivotement peut se translater selon son axe de pivotement (24) pour permettre au robot l'accès à des plans inclinés.

5. Robot selon la revendication 4, **caractérisé en ce que** des moyens de rappels sont prévus pour maintenir l'élément roulant (22) selon au moins deux axes de rotation et/ou de pivotement en contact avec le sol.

6. Robot selon la revendication 5, **caractérisé en ce que** les moyens de rappel exercent un effort permettant d'obtenir au niveau des roues motrices (16) une adhérence au sol ne descendant pas au-dessous d'un seuil déterminé.

7. Robot selon l'une quelconque des revendications précédentes, **caractérisé en ce qu'**il comprend un capotage avec une plaque supérieure (36) sensiblement horizontale comportant des moyens de fixation d'accessoires.

## Claims

1. Robot that can be used for personal home assistance, comprising a wheeled chassis (12), actuators (26) that ensure the movement of the wheeled chassis (12), and command-control means (30) to which sensors send information, the wheeled chassis (12) comprising two driving wheels (16) that have axes of rotation in a transverse plane and wheeled elements (22) along at least two axes of rotation and/or pivoting that each have a vertical pivoting axis (24) that is arranged in the longitudinal median plane of the robot, **characterized in that** it comprises a laser or radar (44) that is arranged in a horizontal slot (38) that is made in the covering of the robot, the bottom of the slot comprising two sections that are arranged symmetrically and that form an angle on the order of 240°.

2. Robot according to claim 1, wherein it comprises an ultrasound sensor barrier (42).

3. Robot according to claim 2, wherein it comprises a covering that has an essentially square or rectangular horizontal section with rounded angles, and wherein the ultrasound sensor belt comprises ultrasound sensors (42.1) at the covering angles, an ultrasound sensor (42.2) at each lateral face of the robot, an ultrasound sensor (42.3) on the rear face, and two ultrasound sensors (42.4) that are arranged symmetrically on the front face of the robot.

4. Robot according to any of the preceding claims, wherein at least one of the wheeled elements (22) along at least two axes of rotation and/or pivoting can move translationally along its pivoting axis (24) to allow the robot access to inclined planes.

5. Robot according to claim 4, wherein return means are provided to keep the wheeled element (22) in contact with the ground along at least two axes of rotation and/or pivoting.

6. Robot according to claim 5, wherein the return means exert a force that makes it possible to obtain - at the driving wheels (16) - an adhesion to the ground that does not go below a determined threshold.

7. Robot according to any of the preceding claims, wherein it comprises a covering with an upper board (36) that is essentially horizontal and that comprises means for attaching accessories.

## Patentansprüche

1. Roboter, der geeignet ist, für die Unterstützung einer Person zu Hause eingesetzt zu werden, umfassend ein fahrbares Untergestell (12), Wirkglieder (26), welche die Bewegung des fahrbaren Untergestells (12) sicherstellen, Kontroll-Steuer-Mittel (30), die durch Sensoren informiert werden, wobei das fahrbare Untergestell (12) zwei Antriebsräder (16), die Drehachsen in einer Querebene haben, sowie um wenigstens zwei Dreh- und/oder Schwenkachsen rollendes Elemente (22), die jeweils eine in einer Längsmittelebene des Roboters angeordnete vertikale Schwenkachse (24) aufweisen, umfasst, **dadurch gekennzeichnet, dass** er ein(en) Laser oder Radar (44) umfasst, der (das) in einem in der Verkleidung des Roboters ausgebildeten horizontalen Schlitz (38) angeordnet ist, wobei der Boden des Schlitzes zwei Flächen aufweist, die zu der Längsmittelebene symmetrisch angeordnet sind und einen Winkel in der Größenordnung von 240° bilden.

2. Roboter nach Anspruch 1, **dadurch gekennzeichnet, dass** er eine Schranke (42) aus Ultraschallsensoren umfasst.

3. Roboter nach Anspruch 2, **dadurch gekennzeichnet, dass** er eine Verkleidung umfasst, die einen im Wesentlichen quadratischen oder rechteckigen horizontalen Querschnitt mit abgerundeten Ecken aufweist, und dass der Ultraschallsensorgürtel Ultraschallsensoren (42.1) im Bereich der Ecken der Verkleidung, einen Ultraschallsensor (42.2) im Bereich einer jeden Seitenfläche des Roboters, einen Ultraschallsensor (42.3) an der Rückseite sowie zwei an der Vorderseite des Roboters symmetrisch angeordnete Ultraschallsensoren (42.4) umfasst.

4. Roboter nach einem der vorstehenden Ansprüche, **dadurch gekennzeichnet, dass** wenigstens eines der um wenigstens zwei Dreh- und/oder Schwenkachsen rollenden Elemente (22) sich entlang seiner Schwenkachse (24) verschieben kann, um dem Roboter den Zugang zu geneigten Ebenen zu ermöglichen.

5. Roboter nach Anspruch 4, **dadurch gekennzeichnet, dass** Rückstellmittel vorgesehen sind, um das um wenigstens zwei Dreh- und/oder Schwenkachsen rollende Element (22) mit dem Boden in Kontakt zu halten.

6. Roboter nach Anspruch 5, **dadurch gekennzeichnet, dass** die Rückstellmittel eine Kraft ausüben, die ermöglicht, im Bereich der Antriebsräder (16) eine Bodenhaftung zu erzielen, die eine bestimmte Schwelle nicht unterschreitet.

7. Roboter nach einem der vorstehenden Ansprüche, **dadurch gekennzeichnet, dass** er eine Verkleidung mit einer im Wesentlichen horizontalen oberen Platte (36) umfasst, die Mittel zur Befestigung von Zubehör aufweist.
